# EUROPEAN PATENT SPECIFICATION

(11) **EP 4 478 179 B1**
(45) Date of publication and mention of the grant of the patent: **15.04.2026**
(21) Application number: 24180757.7
(22) Date of filing: 07.06.2024
(51) Int. Cl.: G06F 8/65, G06F 9/445

(54) **FIELD UPGRADEABLE SYSTEM ON A CHIP (SOC)**
FELD-UPGRADE-SYSTEM AUF EINEM CHIP (SOC)
SYSTÈME ÉVOLUTIF SUR SITE SUR PUCE

(30) Priority: 16.06.2023 US 202318336197
(43) Date of publication of application: 18.12.2024
(73) Proprietor: NXP USA, Inc., Austin TX 78735 (US)
(72) Inventor: Cooper, David Linden, 5656AG Eindhoven (NL); Shah, Kushal Hemantkumar, 5656AG Eindhoven (NL); Hillier, Curtis, 5656AG Eindhoven (NL)
(74) Representative: Miles, John Richard

(56) References cited:
- US-A1- 2013 086 385
- US-A1- 2014 108 825
- US-A1- 2023 088 172

## Description

### Background

### Field

This disclosure relates generally to SOCs, and more specifically, to a field upgradeable SOC.

### Related Art

Vendors typically manufacture different variations of a product in which features of a system on a chip (SOC) are permanently disabled to create low-end versions. This prevents the customer from using full features of the SOC that were not part of the initial purchase. However, this process makes it impossible for the customer to upgrade the SoC with additional features down the line without replacing the entire SOC, which leads to quicker obsolescence of the products and more waste.
US 20130086385 A1 describes a method for managing resources of a device including receiving, by a system-on-chip (SoC) in the device, from a customer, a request to access one or more resources of the SoC. Whether the SoC grants, to the customer, access to the one or more resources is determine using the feature register and the CID.

US 2014/108825 A1 relates to secure provisioning and authorization of features in a hardware device. It discloses a mechanism for validating update requests, including authentication and cryptographic verification, before applying feature enablement changes.

US 2023/088172 A1 describes a hardware security module for managing secure updates and operational configuration of a computing device. It teaches mechanisms for applying updates in a controlled and authenticated manner, including verification of update integrity and error detection during the update process.

### Summary

The invention is as defined in the appended claims.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in block diagram form, an SOC having a user space and a hardware security engine (HSE), along with a process to upgrade the SOC involving the silicon vendor and an original equipment manufacturer (OEM) or a tier 1 supplier (OEM/Tier1), in accordance with one embodiment of the present invention.
FIG. 2 illustrates, in diagrammatic form, a state table which describes a set of status bits used to identify types of records stored in an SOC configuration table of the HSE of FIG. 1, in accordance with one embodiment of the present invention.
FIG. 3 illustrates, in diagrammatic form, example values of the SOC configuration table stored within the HSE of the SOC of FIG. 1 during an update operation, in accordance with an embodiment of the present invention.

### Detailed Description

In one aspect, embodiments described herein allow flexibility in securely enabling/disabling features of an SOC based on customer needs. For example, using a hardware security engine (HSE) of the SOC, different features of the SOC can be enabled/disabled in a secure manner as the customer needs and applications change. This allows customers to buy only the feature set or performance they need at the time of purchase, which reduces upfront cost for the customer, while providing a path to upgrade if needed or desired while the units are deployed in the field. In one embodiment, a hardware state machine (SM) resides in the HSE, which is not accessible by the end user, and manages field upgrades. Also, in some embodiments, secure enablement of features can be implemented to prevent enabling features without licensing from the silicon vendor. In some embodiments, safety mechanisms can also be employed to ensure configuration data integrity. This may include ensuring safe enablement in which the HSE performs a roll back to the last known good state upon detection of an unstable configuration.

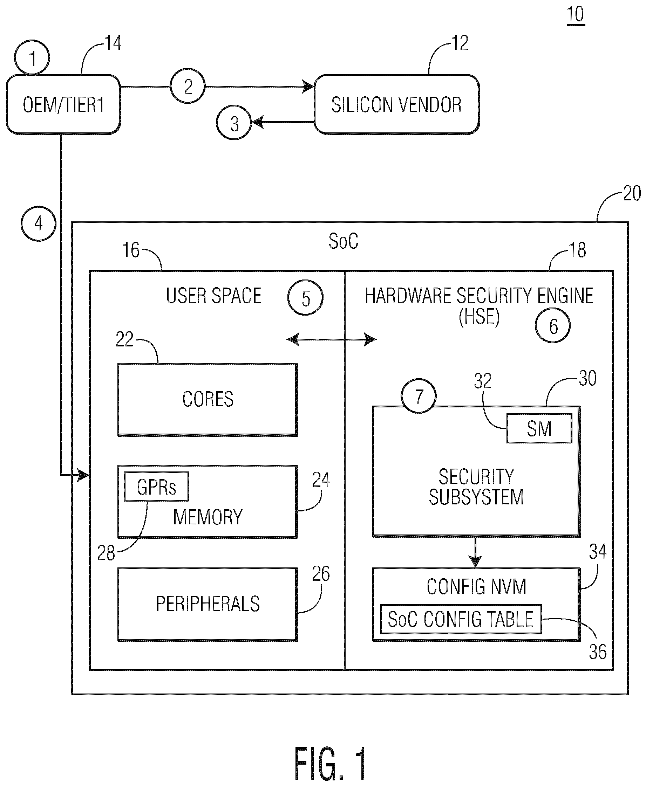

FIG. 1 illustrates, in block diagram form, an SOC 20 having a user space 16 and an HSE 18 coupled to the user space 16, in accordance with one embodiment of the present invention. FIG. 1 also illustrates a method of upgrading SOC 20, even when deployed in the field, involving a silicon vendor 12 of SOC 20 which manufactured the SOC and an OEM or tier 1 supplier (OEM/Tier1) 14 which incorporates SoC 20 into a final product sold to an end user. For example, SOC 20 may be an engine control unit (ECU) and the OEM may be the car manufacturer which includes the ECU into its cars which are sold to customers. Note that for ease of explanation, OEM/Tier1 14 can simply be referred to as OEM 14. Note that, as used herein, upgrading SOC 20 refers to updating SOC 20 by either enabling features, disabling features, or a combination thereof (e.g. in which, with a particular update, some features may be enabled while others disabled).

Referring to SOC 20, user space 16 includes one or more cores 22, one or more memories 24, and one or more peripherals 26. Cores 22 can by any type of core, memories 24 any type of memory (including both volatile and non-volatile memories), and peripherals 26 can include any type of peripherals. Further, user space 16 can include more or fewer elements, as needed, and are all available to an end user of SOC 20. HSE 18 is an on-chip subsystem responsible for cryptographic services to host CPUs and accelerators. Unlike user space 16, all the inner workings of HSE 18 are closed to the end user. Users can only interact with HSE 18 through service calls. HSE 18 is also responsible for establishing the root of trust on the chip during the boot process. Note that HSE 18 can be implemented with any kind of embedded security subsystem that provides these hardware-based security services.

In operation, in the case that SOC 20 needs to be updated by enabling or disabling features, a method implemented with HSE 18 can be performed to allow this update to occur even once SOC 20 is already in use in the field. In FIG. 1, one embodiment of this method will be described in references to the numerical labels 1-7. A user of SOC 20 can contact the appropriate party (the OEM or appropriate supplier), such as OEM 14, to request a hardware update. As indicated by the numerical label 1, OEM 14 can uniquely identify SOC 20 by, for example, obtaining its unique device serial number, and can also determine the desired new hardware feature set for SOC 20. This new hardware feature set may include newly disabled features, newly enabled features, or a combination thereof. As indicated by the numerical label 2, OEM 14 can send the device serial number and feature set update request to silicon vendor 12. As indicated by numerical label 3, silicon vendor 12 can send back an encrypted configuration file with the feature set update information. Note that this file can only be decrypted by HSE 18 of SOC 20 with the same serial number (i.e. the serial number of SOC 20, which is known by SOC 20).

As indicated by numerical label 4, OEM 14 can transfer this encrypted configuration file to SOC 20 using Over-the-Air (OTA) or any other secure update mechanism. This encrypted configuration file can be stored in memory 24 of user space 16, but note that it cannot be decrypted by user space 16. Instead, application software executing in user space 16 of SOC 20 sends a command (e.g. a service request) to HSE 18 to launch a hardware upgrade service using the encrypted configuration file, in which the hardware upgrade service is executed and managed by hardware SM 32 of security subsystem 30 of HSE 18. Communication between user space 16 and HSE 18 is identified by numerical label 5, and if any feedback is provided by HSE 18 that there is a lack of compliance (e.g. lack of the appropriate licensing fee, etc.), the feature set of the encrypted file remains locked out. However, as indicated by numerical label 6, if HSE 18 successfully authenticates the encrypted file, HSE 18 decrypts the encrypted configuration file and runs all security checks. If HSE 18 encounters any issues in doing so, then the update process fails and terminates with an error message.

As indicated by numerical label 7, upon successful decryption and security checks, HSE 18 stores a new configuration value, corresponding to the new configuration provided in the encrypted file from OEM 14, into the next available "blank record" of an SOC configuration (config) table 36 within a configuration non-volatile memory (config NVM) 34 within HSE 18. SM 32 within security subsystem 30 can access SOC config table 36 (and other locations) of config NVM 34 as needed while servicing any security service request sent to HSE 18. In one embodiment, config NVM 34 is implemented with fuses, but alternatively, can be implemented with other types of NVMs (e.g. one-time programmable (OTP) memories, etc.). As will be described in more detail below, data safety can be ensured by triple voting and cyclic redundancy check (CRC) mechanisms. In response to a reboot, SOC can be configured in accordance with the new configuration stored in SOC config table 36.

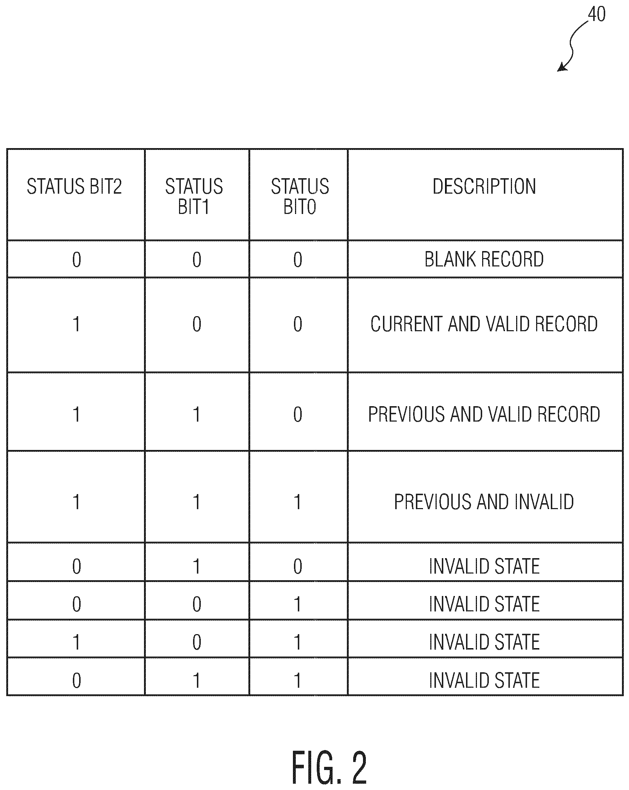

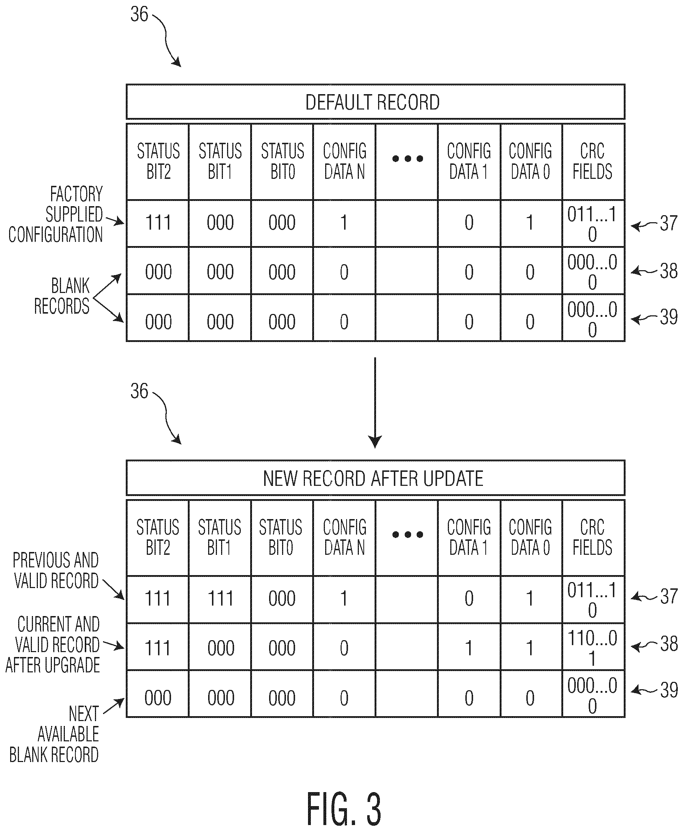

In one embodiment, on every SOC reboot, HSE 18 safely enables or disables hardware features based on the "current and valid" configuration values, runs the self-diagnostics, and boots SOC 20 accordingly. In case of any issue or problem, HSE 18 invalidates the current configuration and roll backs to a "previous and valid" configuration value. Details of how HSE 18 uses SOC config table 36 to properly control configurations for SOC 20 will be described in more detail in reference to FIGs. 2 and 3 below. After properly setting the configuration during the SOC reboot, HSE 18 also updates a general purpose register (GPR) of user space 16 (in which, in one embodiment, this GPR is located withing GPRs 28 of memory 24 of user space 16). In one embodiment, this GPR is a read only register by user space 16, in which it can only be written by HSE 18. In one embodiment, this GPR is readable to all masters of SOC 20, in both user space 16 and HSE 18. In this manner, all masters of SOC 20 are aware of the available features of SOC 20.

FIG. 2 illustrates, in diagrammatic form, a table 40 which describes a set of status bits used to identify types of records stored in SOC config table 36 (in which each configuration stored in SOC config table 36 has a corresponding record type), in accordance with one embodiment of the present invention. In the illustrated embodiment, the set of status bits includes three status bits: status bit0, status bit1, and status bit2, in which the bit values of each of these bits in FIG. 2 is represented in binary form. (Note also that, as used herein, symbol "%" preceding a number indicates that the number is represented in its binary or base two form.) Therefore, in the first row of table 40, a blank record is indicated by status bit2, status bit1, and status bit0 being %000. In the second row, a "current and valid" record is indicated by status bit2, status bit1, and status bit0 being %100. In the third row, a "previous and valid" record is indicated by status bit2, status bit1, and status bit0 being %110. In the fourth row, a "previous and invalid" record is indicated by status bit2, status bit1, and status bit0 being %111. The remaining values of the status bits (%010, %001, %101, and %011) all correspond to invalid states. Note that in alternate embodiments, a different number of status bits may be used, in which the status bits may correspond to more or fewer than the five record types illustrated in table 40 (blank, current and valid, previous and valid, previous and invalid, and invalid). Also, an alternate encoding scheme can be used.

FIG. 3 illustrates in diagrammatic form, values of SOC config table 36 during operation of a hardware upgrade service performed by HSE 18 of SOC 20, in accordance with one embodiment of the present invention. In the illustrated embodiment, each entry of SOC config table 36 includes a status field which includes three status bits, a configuration data field which includes N+1 bits of configuration data (config data N ... config data 0), and a CRC field which includes M CRC bits used to check the integrity of the corresponding configuration data. In the illustrated embodiment, for added data integrity, each of the three status bits is stored in triplicate, therefore, each of status bit2, bit1, and bit0 is indicated as actually being 3-bits, but the resulting value of each status bit is determined by a voting of the 3-bits (in which the bit value shared by at least 2 of the 3 bits corresponds to the resulting value of the status bit). Each of the resulting 3-bit values for status bit2, bit1, and bit0 corresponds to the record type provided in table 40 of FIG. 2. Note that any odd number of bits may be used for each status bit to implement a voting system for obtaining the bit value. Alternatively, only a single bit may be stored for each status bit,.

Each of N and M can be any integer values, as needed, for the configuration data and CRC bits, respectively. In one embodiment, each configuration bit of the N+1 configuration bits can correspond to a set of one or more features which are enabled in SOC 20 for that configuration (in which, e.g., one bit value indicates the set of one or more features are enabled and another bit value indicates the set of one or more features are disabled). Note also that any type of error correction/detection can be used for the configuration data, in which any type of check bits may be stored instead of CRC bits, as needed, based on the error correction/detection type. In the illustrated embodiments, SOC config table 36 includes three entries, entries 37-39, in which each entry stores a corresponding configuration record. (Note that each entry may therefore also be referred to as a record.) In alternate embodiments, table 36 can include any number of entries to store any number of configuration records.

The top version of SOC config table 36 corresponds to the default record (i.e. default SOC config table) which corresponds to the factory supplied configuration. For example, this default record is programmed by silicon vendor 12 and is originally present in HSE 18 of SOC 20. The record stored at entry 37 has a status of %100 and therefore corresponds to the "current and valid" record. The remaining entries (including entries 38 and 39) each have a status of %000, indicating blank records (i.e. blank entries) in which new configuration records can be stored upon successful field upgrades or updates (in which the blank entries can only be accessed and modified by HSE 18). Security subsystem 30 includes SM 32 and any related logic used to implement SM 32. SM 32 and related logic are responsible for reading from and writing to config NVM 34, including SOC config table 36, selecting the valid configuration (the record whose status bits are %100) upon reboots of SOC 20, and facilitating the writing of a new record at the next available blank location, as needed. Note that, at any given time, only one entry of SOC config table 36 should be marked as the "current and valid" record (having status bits of %100).

The bottom version of SOC config table 36 of FIG. 3 corresponds to the new values stored in the table after a successful hardware upgrade. As described above, user space 16, upon receiving an encrypted file from OEM 14, can request the hardware upgrade service from HSE 18, in which upon successful authentication, decryption, and integrity checks, HSE 18 is able to obtain the configuration data (in plain and decrypted format). This includes, for example, the N+1 bits of new configuration data for the upgrade. HSE 18 uses the new configuration data to compute the corresponding CRC bits. Using SM 32, HSE 18 identifies the next available blank record (e.g. entry 38 in the illustrated embodiment), and writes the new configuration data into the entry of the blank record, along with the corresponding CRC bits. HSE 18 can then run verification of the write operation by reading the data back and comparing against intended values. Upon a successful write, HSE 18 updates the status bits of the old "current and valid" record (in entry 37) to %110 to now mark this record as a "previous and valid" record and updates the status bits of the selected blank record to %100 to mark this new record (in entry 38) as the "current and valid" record rather than a blank record. Upon any failure by SM 32 in updating SOC config table 36 with the new configuration, HSE 18 updates the status bits to indicate that this new location is in an "invalid state."

Therefore, after the successful configuration update, the configuration data of entry 38 is used to configure SOC 20 upon the next power-on-reset (POR). That is, the new configuration becomes effective after the next reboot. In one embodiment, SOC config table 36 can be updated by HSE 18 prior to the boot, such as by a power mode controller of SOC 20, before the boot code begins. Also, after the successful configuration update, note that entry 37 is marked as the previous and valid record, and entry 39 is the next blank record which will be updated upon a subsequent hardware upgrade. Upon the successful configuration upgrade, HSE 18 also stores the "current and valid" configuration data into a GPR of user data 16 (in GPRs 28).

As described above, SM 32 is able to identify the current and valid configuration data used for booting SOC 20 based on the status bits of table 36. Based on the configuration data of the current and valid record, HSE 18 enables/disables SOC features and safely boots the device. HSE 18 can also run SOC 20 self-diagnostics (e.g. hardware diagnostics) to ensure proper operation. In one embodiment, if any issues or problems are identified during the self-diagnostics, SM 32 invalidates the "current and valid" configuration by now marking that entry as invalid and rolling back to the "previous and valid" record by marking that entry as now the "current and valid" entry. If that rolled back configuration also has issues or problems, SM 32 can continue rolling back to previous and valid configurations, and can again end up back at the default factory supplied configuration. Reverting back to a previous or factory-supplied state ensures proper and safe operation of SOC 20.

While embodiments described herein are described to upgrade or change features within an SoC, the concepts can be extended to enable software licensing and validation to allow software upgrades in the field. For example, this method can be used to upgrade from basic firmware to premium firmware, upgrade evaluation license to production license, etc. It can also be used to lock the user into standard software offerings if not licensed. Additionally, this method could be used to license new software that has been created after the silicon has launched. This could also be used to prevent firmware roll back.

Therefore, by now it can be appreciated that there has been provided an SOC with an embedded HSE which provides support for secure upgrades or feature changes. For example, the on-chip HSE provides a service to load, authenticate, decrypt, interpret and install a configuration data file received by the SOC, in which the configuration data includes information as to which features are to be enabled or disabled within the SOC. The HSE includes a hardware module which includes an SOC configuration table and an SM state machine which manages the SOC configuration table for enabling or disabling features in accordance with received configuration data. The SOC configuration table is stored in a fuse bank or NVM within the HSE. In the case of any invalid configuration file, authentication failure, decryption failure, or other failures, the HSE terminates the upgrade or feature change, and is capable of rolling back the configuration of the SOC to a previously known valid configuration. Configuration data for the current valid configuration and any previous valid configurations are stored in the SOC configuration table, in which the HSE has exclusive read, write, and modify access to the SOC configuration table. In one embodiment, each entry of the SOC configuration table includes a corresponding set of status bits which identify a record type of the entry (e.g. a valid and current record, a valid and previous record, a blank record, or an invalid record). At least in the case of valid records, the corresponding entry also stores corresponding configuration bits for enabling or disabling SOC features and may also store corresponding check bits for the corresponding configuration bits.

A system on a chip (SOC) includes a user space having one or more cores, and a hardware security engine (HSE). The HSE includes storage circuitry configured to store an SOC configuration table. The SOC configuration table is configured to store, in a first entry, a current and valid configuration record corresponding to a current configuration of the SOC. The HSE is configured to, in response to an update service request from a core of the user space, decrypt an encrypted file to obtain new configuration data, update a blank record in a second entry of the SOC configuration table to be the current and valid configuration record storing the new configuration data, and update the current and valid configuration record in the first entry to be a previous and valid configuration record.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Some of the above embodiments, as applicable, may be implemented using a variety of different information processing systems. For example, although FIG. 1 and the discussion thereof describe an exemplary information processing architecture, this exemplary architecture is presented merely to provide a useful reference in discussing various aspects of the invention. Of course, the description of the architecture has been simplified for purposes of discussion, and it is just one of many different types of appropriate architectures which includes an on-chip HSE that may be used in accordance with embodiments of the invention. Those skilled in the art will recognize that the boundaries between logic blocks are merely illustrative and that alternative embodiments may merge logic blocks or circuit elements or impose an alternate decomposition of functionality upon various logic blocks or circuit elements.

Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, different types of storage circuitry can be used to implement the SOC config table within the HSE. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

The following are various embodiments of the present invention. Note that any of the aspects below can be used in any combination with each other and with any of the disclosed embodiments.

In one embodiment, a system on a chip (SOC) includes a user space having one or more cores; and a hardware security engine (HSE) which includes storage circuitry configured to store an SOC configuration table, wherein the SOC configuration table is configured to store, in a first entry, a current and valid configuration record corresponding to a current configuration of the SOC. The HSE is configured to, in response to an update service request from a core of the user space, decrypt an encrypted file to obtain new configuration data, update a blank record in a second entry of the SOC configuration table to be the current and valid configuration record storing the new configuration data, and update the current and valid configuration record in the first entry to be a previous and valid configuration record. In one aspect of the embodiment, the user space can only interact with the HSE through service calls wherein the service calls include service requests. In another aspect, each entry of the SOC configuration table is configured to include a status field having one or more status bits and a configuration field having a plurality of configuration bits. In a further aspect, the status field of each entry indicates a record type stored by the entry, wherein the record type is selected from a group consisting of a current and valid record, a previous and valid record, a blank record, and an invalid record. In yet a further aspect, the HSE is configured to store each of the one or more status bits in each status field in triplicate. In another aspect, the encrypted file cannot be decrypted by the user space and wherein the user space has no read, no write, and no modify access to the SOC configuration table. In a further aspect, the new configuration data in the second entry provides information as to which features of the SOC are enabled for an updated configuration of the SOC. In a further aspect, the updated configuration of the SOC enables different features of the SOC than those which were enabled by configuration data of the previous and valid configuration record in the first entry. In another aspect of the embodiment, a memory of the user space is configured to receive the encrypted file with the new configuration data as an over-the-air (OTA) update. In another aspect, the HSE is configured to, in response to an error occurring during the decrypting or updating, update the current and valid configuration record storing the new configuration data in the second entry to be an invalid record, and roll back a previous and valid record in a third entry of the SOC configuration table to be the current and valid configuration record. In a further aspect, the previous and valid record in the third entry is an initial default record of the SOC configuration record which includes a default configuration programmed when the SOC is manufactured. In another aspect, the HSE is configured to perform the decrypting and the updates in response to the update service request, after the SOC has been manufactured and deployed in the field. In yet an other aspect, the storage circuitry is implemented as a non-volatile memory. In yet another aspect, the HSE is configured to, in response to successfully decrypting and updating in response to the update service request, copy the new configuration data into a general purpose register (GPR) of the user space.

In another embodiment, a method for updating a hardware configuration in an SOC having a user space and a hardware encryption engine (HSE), the HSE including an SOC configuration table configured to store, in a first entry, a current and valid configuration record, includes providing an update service request by the user space to the HSE; in response to the update service request, decrypting, by the HSE, an encrypted file to obtain new configuration data; updating, by the HSE, a blank record in a second entry of the SOC configuration table to be the current and valid configuration record storing the new configuration data; updating, by the HSE, the current and valid configuration record in the first entry to be a previous and valid configuration record; and storing information corresponding to the current and valid configuration record in the second entry into a general purpose register of the user space. In one aspect of the an other embodiment, updating any entry of the SOC configuration further includes updating a set of status bits which identify a type of record stored in the entry. In another aspect, the encrypted file cannot be decrypted by the user space and wherein the user space has no read, no write, and no modify access to the SOC configuration table. In another aspect, the previous and valid configuration record in the first entry provides information as to which features of the SOC were enabled prior to the HSE receiving the update service request, and the new configuration data in the second entry provides information as to which features of the SOC are enabled after rebooting with the new configuration data in the second entry marked as the current and valid record. In yet another aspect of the another embodiment, the method further includes detecting an error by the HSE; and, in response to the error, updating, by the HSE, the current and valid configuration record storing the new configuration data in the second entry to be an invalid record, and updating, by the HSE, a previous and valid record in a third entry of the SOC configuration table to be the current and valid configuration record. In another aspect, providing the update service request by the user space to the HSE is performed after deploying the SOC in the field and after transmitting the encrypted file with the new configuration data to the deployed SOC.

## Claims

1. A system on a chip, SOC, (120) comprising:
a user space (16) having one or more cores (22); and
a hardware security engine, HSE, (18) which includes storage circuitry configured to store an SOC configuration table (36), wherein the SOC configuration table is configured to store, in a first entry, a current and valid configuration record corresponding to a current configuration of the SOC, and the HSE is configured to, in response to an update service request from a core of the user space:
decrypt an encrypted file to obtain new configuration data,
update a blank record in a second entry of the SOC configuration table to be the current and valid configuration record storing the new configuration data, and
update the current and valid configuration record in the first entry to be a previous and valid configuration record,
wherein the HSE is further configured to, in response to an error occurring during the decrypting or updating:
update the current and valid configuration record storing the new configuration data in the second entry to be an invalid record, and roll back a previous and valid record in a third entry of the SOC configuration table to be the current and valid configuration record.

2. The SOC of claim 1, wherein the user space can only interact with the HSE through service calls wherein the service calls include service requests.

3. The SOC of claim 1 or 2, wherein each entry of the SOC configuration table is configured to include a status field having one or more status bits and a configuration field having a plurality of configuration bits.

4. The SOC of claim 3, wherein the status field of each entry indicates a record type stored by the entry, wherein the record type is selected from a group consisting of a current and valid record, a previous and valid record, a blank record, and an invalid record.

5. The SOC of claim 4, wherein the HSE is configured to store each of the one or more status bits in each status field in triplicate.

6. The SOC of any preceding claim, wherein the encrypted file cannot be decrypted by the user space and wherein the user space has no read, no write, and no modify access to the SOC configuration table.

7. The SOC of claim 6, wherein the new configuration data in the second entry provides information as to which features of the SOC are enabled for an updated configuration of the SOC.

8. The SOC of claim 7, wherein the updated configuration of the SOC enables different features of the SOC than those which were enabled by configuration data of the previous and valid configuration record in the first entry.

9. The SOC of any preceding claim, wherein a memory of the user space is configured to receive the encrypted file with the new configuration data as an over-the-air (OTA) update.

10. The SOC of any preceding claim, wherein the previous and valid record in the third entry is an initial default record of the SOC configuration record which includes a default configuration programmed when the SOC is manufactured.

11. The SOC of any preceding claim, wherein the HSE is configured to perform the decrypting and the updates in response to the update service request, after the SOC has been manufactured and deployed in the field.

12. The SOC of any preceding claim, wherein the HSE is configured to, in response to successfully decrypting and updating in response to the update service request, copy the new configuration data into a general purpose register, GPR, of the user space.

13. A method for updating a hardware configuration in a system on a chip, SOC, (120) having a user space (16) and a hardware encryption engine, HSE, (18) the HSE including an SOC configuration table (36) configured to store, in a first entry, a current and valid configuration record, the method comprising:
providing an update service request by the user space to the HSE;
in response to the update service request, decrypting, by the HSE, an encrypted file to obtain new configuration data;
updating, by the HSE, a blank record in a second entry of the SOC configuration table to be the current and valid configuration record storing the new configuration data;
updating, by the HSE, the current and valid configuration record in the first entry to be a previous and valid configuration record; and
in response to an error occurring during the decrypting or updating:
updating by the HSE, the current and valid configuration record storing the new configuration data in the second entry to be an invalid record, and rolling back a previous and valid record in a third entry of the SOC configuration table to be the current and valid configuration record.

14. The method of claim 13, further comprising storing information corresponding to the current and valid configuration record in the second entry into a general purpose register of the user space.

15. The method of claim 13 or 14, wherein updating any entry of the SOC configuration further comprises updating a set of status bits which identify a type of record stored in the entry.

## Patentansprüche

1. System-auf-einem-Chip, SoC, (120), das Folgendes umfasst:
einen Benutzerbereich (16) mit einem oder mehreren Kernen (22); und
Hardwaresicherheits-Engine, HSE, (18), die eine Speicherungsschaltungsanordnung beinhaltet, die dazu konfiguriert ist, eine SOC-Konfigurationstabelle (36) zu speichern, wobei die SOC-Konfigurationstabelle dazu konfiguriert ist, in einem ersten Eintrag eine aktuelle und gültige Konfigurationsaufzeichnung zu speichern, die einer aktuellen Konfiguration des SOC entspricht, und die HSE , als Reaktion auf eine Aktualisierungsdienstanforderung von einem Kern des Benutzerbereichs, zu Folgendem konfiguriert ist:
Entschlüsseln einer verschlüsselten Datei, um neue Konfigurationsdaten zu erhalten,
Aktualisieren einer leeren Aufzeichnung in einem zweiten Eintrag der SOC-Konfigurationstabelle, um die aktuelle und gültige Konfigurationsaufzeichnung zu sein, die die neuen Konfigurationsdaten speichert, und
Aktualisieren der aktuellen und gültigen Konfigurationsaufzeichnung in dem ersten Eintrag, um eine vorherige und gültige Konfigurationsaufzeichnung zu sein,
wobei die HSE ferner, als Reaktion auf einen Fehler, der während des Entschlüsselns oder Aktualisierens auftritt, zu Folgendem konfiguriert ist:
Aktualisieren der aktuellen und gültigen Konfigurationsaufzeichnung, die die neuen Konfigurationsdaten in dem zweiten Eintrag speichert, um eine ungültige Aufzeichnung zu sein, und Zurücksetzen in eine vorherige und gültige Aufzeichnung in einem dritten Eintrag der SOC-Konfigurationstabelle, um die aktuelle und gültige Konfigurationsaufzeichnung zu sein.

2. SOC nach Anspruch 1, wobei der Benutzerbereich nur durch Dienstaufrufe mit der HSE interagieren kann, wobei die Dienstaufrufe Dienstanforderungen beinhalten.

3. SOC nach Anspruch 1 oder 2, wobei jeder Eintrag der SOC-Konfigurationstabelle dazu konfiguriert ist, ein Statusfeld mit einem oder mehreren Statusbits und ein Konfigurationsfeld mit mehreren Konfigurationsbits zu beinhalten.

4. SOC nach Anspruch 3, wobei das Statusfeld jedes Eintrags einen durch den Eintrag gespeicherten Aufzeichnungstyp angibt, wobei der Aufzeichnungstyp aus einer Gruppe ausgewählt ist, die aus einer aktuellen und gültigen Aufzeichnung, einer vorherigen und gültigen Aufzeichnung, einer leeren Aufzeichnung und einer ungültigen Aufzeichnung besteht.

5. SOC nach Anspruch 4, wobei die HSE dazu konfiguriert ist, jedes des einen oder der mehreren Statusbits in jedem Statusfeld dreifach zu speichern.

6. SOC nach einem vorhergehenden Anspruch, wobei die verschlüsselte Datei nicht durch den Benutzerbereich entschlüsselt werden kann und wobei der Benutzerbereich keinen Lese-, keinen Schreib- und keinen Modifizierungszugriff auf die SOC-Konfigurationstabelle aufweist.

7. SOC nach Anspruch 6, wobei die neuen Konfigurationsdaten in dem zweiten Eintrag Informationen darüber bereitstellen, welche Merkmale des SOC für eine aktualisierte Konfiguration des SOC ermöglicht sind.

8. SOC nach Anspruch 7, wobei die aktualisierte Konfiguration des SOC andere Merkmale des SOC ermöglicht als jene, die durch Konfigurationsdaten der vorherigen und gültigen Konfigurationsaufzeichnung in dem ersten Eintrag ermöglicht wurden.

9. SOC nach einem vorhergehenden Anspruch, wobei ein Speicher des Benutzerbereichs dazu konfiguriert ist, die verschlüsselte Datei mit den neuen Konfigurationsdaten als eine Over-The-Air(OTA)-Aktualisierung zu empfangen.

10. SOC nach einem vorhergehenden Anspruch, wobei die vorherige und gültige Aufzeichnung in dem dritten Eintrag eine anfängliche Standardaufzeichnung der SOC-Konfigurationsaufzeichnung ist, die eine Standardkonfiguration beinhaltet, die programmiert wird, wenn das SOC hergestellt wird.

11. SOC nach einem vorhergehenden Anspruch, wobei die HSE dazu konfiguriert ist, das Entschlüsseln und die Aktualisierungen als Reaktion auf die Aktualisierungsdienstanforderung durchzuführen, nachdem das SOC hergestellt und im Feld eingesetzt wurde.

12. SOC nach einem vorhergehenden Anspruch, wobei die HSE dazu konfiguriert ist, als Reaktion auf erfolgreiches Entschlüsseln und Aktualisieren als Reaktion auf die Aktualisierungsdienstanforderung, die neuen Konfigurationsdaten in ein Mehrzweckregister, GPR, des Benutzerbereichs zu kopieren.

13. Verfahren zum Aktualisieren einer Hardwarekonfiguration in einem System-auf-einem-Chip, SOC, (120) mit einem Benutzerbereich (16) und einer Hardwareverschlüsselungs-Engine, HSE, (18), wobei die HSE eine SOC-Konfigurationstabelle (36) beinhaltet, die dazu konfiguriert ist, in einem ersten Eintrag eine aktuelle und gültige Konfigurationsaufzeichnung zu speichern, wobei das Verfahren Folgendes umfasst:
Liefern einer Aktualisierungsdienstanforderung durch den Benutzerbereich an die HSE;
als Reaktion auf die Aktualisierungsdienstanforderung Entschlüsseln, durch die HSE, einer verschlüsselten Datei, um neue Konfigurationsdaten zu erhalten;
Aktualisieren, durch die HSE, einer leeren Aufzeichnung in einem zweiten Eintrag der SOC-Konfigurationstabelle, um die aktuelle und gültige Konfigurationsaufzeichnung zu sein, die die neuen Konfigurationsdaten speichert;
Aktualisieren, durch die HSE, der aktuellen und gültigen Konfigurationsaufzeichnung in dem ersten Eintrag, um eine vorherige und gültige Konfigurationsaufzeichnung zu sein; und
als Reaktion auf einen Fehler, der während des Entschlüsselns oder Aktualisierens auftritt:
Aktualisieren, durch die HSE, der aktuellen und gültigen Konfigurationsaufzeichnung, die die neuen Konfigurationsdaten in dem zweiten Eintrag speichert, um eine ungültige Aufzeichnung zu sein, und Zurücksetzen in eine vorherige und gültige Aufzeichnung in einem dritten Eintrag der SOC-Konfigurationstabelle, um die aktuelle und gültige Konfigurationsaufzeichnung zu sein.

14. Verfahren nach Anspruch 13, das ferner Speichern von Informationen, die der aktuellen und gültigen Konfigurationsaufzeichnung in dem zweiten Eintrag entsprechen, in ein Mehrzweckregister des Benutzerbereichs umfasst.

15. Verfahren nach Anspruch 13 oder 14, wobei das Aktualisieren eines beliebigen Eintrags der SOC-Konfiguration ferner Aktualisieren eines Satzes von Statusbits umfasst, die einen Typ von Aufzeichnung identifizieren, die in dem Eintrag gespeichert ist.

## Revendications

1. Système sur puce, SOC, (120) comprenant :
un espace (16) d'utilisateur doté d'un ou de plusieurs cœurs (22) ; et
un moteur de sécurité matérielle, HSE (18), qui comprend des circuits de stockage configurés pour stocker une table (36) de configuration de SOC, la table de configuration de SOC étant configurée pour stocker, dans une première entrée, un enregistrement de configuration actuel et valide correspondant à une configuration actuelle du SOC, et le HSE étant configuré pour, en réponse à une demande de service de mise à jour provenant d'un cœur de l'espace d'utilisateur :
déchiffrer un fichier chiffré pour obtenir de nouvelles données de configuration,
mettre à jour un enregistrement vide dans une deuxième entrée de la table de configuration de SOC pour qu'il soit l'enregistrement de configuration actuel et valide stockant les nouvelles données de configuration, et
mettre à jour l'enregistrement de configuration actuel et valide dans la première entrée pour qu'il soit un enregistrement de configuration précédent et valide,
le HSE étant en outre configuré pour, en réponse à la survenue d'une erreur lors du déchiffrement ou de la mise à jour :
mettre à jour l'enregistrement de configuration actuel et valide stockant les nouvelles données de configuration dans la deuxième entrée pour qu'il soit un enregistrement non valide, et rétrograder un enregistrement précédent et valide dans une troisième entrée de la table de configuration de SOC pour qu'il soit l'enregistrement de configuration actuel et valide.

2. SOC selon la revendication 1, dans lequel l'espace d'utilisateur ne peut interagir avec le HSE que par le biais d'appels de service, les appels de service incluant des demandes de service.

3. SOC selon la revendication 1 ou 2, chaque entrée de la table de configuration de SOC étant configurée pour inclure un champ d'état comprenant un ou plusieurs bits d'état et un champ de configuration comprenant une pluralité de bits de configuration.

4. SOC selon la revendication 3, le champ d'état de chaque entrée indiquant un type d'enregistrement stocké par l'entrée, dans type d'enregistrement étant sélectionné dans un groupe constitué d'un enregistrement courant et valide, d'un enregistrement précédent et valide, d'un enregistrement vide et d'un enregistrement non valide.

5. SOC selon la revendication 4, le HSE étant configuré pour stocker le ou chacun des bits d'état dans chaque champ d'état en triple exemplaire.

6. SOC selon l'une quelconque des revendications précédentes, le fichier chiffré ne pouvant pas être déchiffré par l'espace d'utilisateur et l'espace d'utilisateur n'ayant pas d'accès en lecture, en écriture et en modification à la table de configuration de SOC.

7. SOC selon la revendication 6, les nouvelles données de configuration dans la deuxième entrée fournissant des informations sur celles des caractéristiques du SOC qui sont activées pour une configuration mise à jour du SOC.

8. SOC selon la revendication 7, la configuration mise à jour du SOC activant des caractéristiques du SOC différentes de celles qui ont été activées par des données de configuration de l'enregistrement de configuration précédent et valide dans la première entrée.

9. SOC selon l'une quelconque des revendications précédentes, une mémoire de l'espace d'utilisateur étant configurée pour recevoir le fichier chiffré avec les nouvelles données de configuration en tant que mise à jour par liaison radio (OTA).

10. SOC selon l'une quelconque des revendications précédentes, l'enregistrement précédent et valide dans la troisième entrée étant un enregistrement initial par défaut de l'enregistrement de configuration de SOC qui inclut une configuration par défaut programmée lorsque le SOC est fabriqué.

11. SOC selon l'une quelconque des revendications précédentes, le HSE étant configuré pour effectuer le déchiffrement et les mises à jour en réponse à la demande de service de mise à jour, après que le SOC a été fabriqué et déployé sur le terrain.

12. SOC selon l'une quelconque des revendications précédentes, le HSE étant configuré pour, en réponse au déchiffrement et à la mise à jour réussis en réponse à la demande de service de mise à jour, copier les nouvelles données de configuration dans un registre universel, GPR, de l'espace d'utilisateur.

13. Procédé de mise à jour d'une configuration matérielle dans un système sur puce, SOC, (120) comprenant un espace (16) d'utilisateur et un moteur de sécurité matérielle, HSE (18), le HSE incluant une table (36) de configuration de SOC configurée pour stocker, dans une première entrée, un enregistrement de configuration actuel et valide, le procédé comprenant :
la fourniture, par l'espace d'utilisateur au HSE, d'une demande de service de mise à jour ;
en réponse à la demande du service de mise à jour, le déchiffrement par le HSE d'un fichier chiffré pour obtenir de nouvelles données de configuration ;
la mise à jour, par le HSE, d'un enregistrement vide dans une deuxième entrée de la table de configuration de SOC pour qu'il soit l'enregistrement de configuration courant et valide stockant les nouvelles données de configuration ;
la mise à jour, par le HSE, de l'enregistrement de configuration actuel et valide dans la première entrée pour qu'il soit un enregistrement de configuration précédent et valide ; et
en réponse à la survenue d'une erreur pendant le déchiffrement ou la mise à jour :
la mise à jour par le HSE, de l'enregistrement de configuration actuel et valide stockant les nouvelles données de configuration dans la deuxième entrée pour qu'il soit un enregistrement non valide, et la rétrogradation d'un enregistrement précédent et valide dans une troisième entrée de la table de configuration de SOC pour qu'il soit l'enregistrement de configuration actuel et valide.

14. Procédé selon la revendication 13, comprenant en outre le stockage d'informations correspondant à l'enregistrement de configuration actuel et valide dans la deuxième entrée dans un registre à usage général de l'espace d'utilisateur.

15. Procédé selon la revendication 13 ou 14, la mise à jour de toute entrée de la configuration SOC comprenant en outre la mise à jour d'un ensemble de bits d'état qui identifient un type d'enregistrement stocké dans l'entrée.
